(19) **Europäisches Patentamt / European Patent Office / Office européen des brevets**

(11) **EP 4 692 222 A1**

(12) **EUROPEAN PATENT APPLICATION**
published in accordance with Art. 153(4) EPC

(43) Date of publication:
**11.02.2026 Bulletin 2026/07**

(21) Application number: 24779685.7

(22) Date of filing: **18.03.2024**

(51) International Patent Classification (IPC):
$C08L\ 27/06^{(2006.01)}$    $B29C\ 41/18^{(2006.01)}$
$B32B\ 27/22^{(2006.01)}$    $B32B\ 27/30^{(2006.01)}$
$C08L\ 23/28^{(2025.01)}$

(52) Cooperative Patent Classification (CPC):
B29C 41/18; B32B 27/22; B32B 27/30;
C08L 23/28; C08L 27/06

(86) International application number:
**PCT/JP2024/010609**

(87) International publication number:
**WO 2024/203560 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023059282**

(71) Applicant: **Zeon Corporation
Tokyo 100-8246 (JP)**

(72) Inventor: **FUJIWARA, Takanori
Tokyo 100-8246 (JP)**

(74) Representative: **Maiwald GmbH
Elisenhof
Elisenstraße 3
80335 München (DE)**

(54) **VINYL CHLORIDE RESIN COMPOSITION, VINYL CHLORIDE RESIN MOLDED ARTICLE, LAMINATE, AND AUTOMOTIVE INSTRUMENT PANEL**

(57) Provided is a vinyl chloride resin composition that is capable of forming a vinyl chloride resin molded product having excellent adhesiveness to a polyolefin substrate. The vinyl chloride resin composition contains a vinyl chloride resin, a plasticizer, and a chlorinated polyolefin.

EP 4 692 222 A1

**Description**

TECHNICAL FIELD

The present disclosure relates to a vinyl chloride resin composition, a vinyl chloride resin molded product, a laminate, and an automobile instrument panel.

BACKGROUND

Vinyl chloride resins are used in a variety of applications due to generally having excellent characteristics in terms of cold resistance, heat resistance, oil resistance, and so forth. Specifically, a surface skin that is formed of a vinyl chloride resin molded product may be used in the formation of automobile interior components such as automobile instrument panels and door trims, for example.

A vinyl chloride resin molded product that constitutes a surface skin of an automobile interior component such as an automobile instrument panel is produced, for example, by a method in which a vinyl chloride resin composition containing a vinyl chloride resin, a plasticizer, and additives is subjected to molding by powder slush molding or the like.

On the other hand, the use of a polyolefin substrate as a substrate of a surface skin is a known technique. Since adhesiveness between a vinyl chloride resin molded product and a polyolefin substrate is poor, the polyolefin substrate is normally adhered to the vinyl chloride resin molded product after being treated using a primer (for example, Patent Literature (PTL) 1).

CITATION LIST

Patent Literature

PTL 1: JP-S61-115839A

SUMMARY

(Technical Problem)

It would be useful to provide a vinyl chloride resin molded product having good adhesiveness to a polyolefin substrate even without primer treatment, and there is demand for a vinyl chloride resin composition that is capable of forming such a vinyl chloride resin molded product.

Accordingly, one object of the present disclosure is to provide a vinyl chloride resin composition that is capable of forming a vinyl chloride resin molded product having good adhesiveness to a polyolefin substrate.

Another object of the present disclosure is to provide a vinyl chloride resin molded product having good adhesiveness to a polyolefin substrate.

Yet another object of the present disclosure is to provide a laminate including this vinyl chloride resin molded product and an automobile instrument panel including this laminate.

(Solution to Problem)

The inventor conducted diligent investigation with the aim of solving the problem set forth above. The inventor discovered that by adding a chlorinated polyolefin to a vinyl chloride resin composition, it is possible to improve adhesiveness to a polyolefin substrate of a vinyl chloride resin molded product that is formed using this vinyl chloride resin composition, and, in this manner, completed the present disclosure.

Specifically, with the aim of advantageously solving the problem set forth above, primary configurations of the present disclosure are as follows.

[1] A vinyl chloride resin composition comprising a vinyl chloride resin, a plasticizer, and a chlorinated polyolefin.

[2] The vinyl chloride resin composition according to [1], wherein the chlorinated polyolefin is not less than 0.1 parts by mass and not more than 50 parts by mass relative to 100 parts by mass of the vinyl chloride resin.

[3] The vinyl chloride resin composition according to [1] or [2], wherein the chlorinated polyolefin has a chlorine content ratio of not less than 10 mass% and not more than 45 mass%.

[4] The vinyl chloride resin composition according to any one of [1] to [3], wherein the chlorinated polyolefin has a weight-average molecular weight of not less than 10,000 and not more than 260,000.

[5] The vinyl chloride resin composition according to any one of [1] to [4], wherein the plasticizer is not less than 30 parts by mass and not more than 140 parts by mass relative to 100 parts by mass of the vinyl chloride resin.

[6] The vinyl chloride resin composition according to any one of [1] to [5], used in powder molding.

[7] The vinyl chloride resin composition according to [6], used in powder slush molding.

[8] A vinyl chloride resin molded product obtained through molding of the vinyl chloride resin composition according to any one of [1] to [7].

[9] The vinyl chloride resin molded product according to [8], for an automobile instrument panel.

[10] A laminate comprising: the vinyl chloride resin molded product according to [8] or [9]; and a polyolefin substrate.

[11] An automobile instrument panel comprising the laminate according to claim [10].

(Advantageous Effect)

According to the present disclosure, it is possible to provide a vinyl chloride resin composition that is capable of forming a vinyl chloride resin molded product having excellent adhesiveness to a polyolefin substrate.

Moreover, according to the present disclosure, it is possible to provide a vinyl chloride resin molded product having excellent adhesiveness to a polyolefin substrate.

Furthermore, according to the present disclosure, it is possible to provide a laminate including this vinyl chloride resin molded product and an automobile instrument panel including this laminate.

According to the present disclosure, excellent adhesiveness of a vinyl chloride resin molded product to a polyolefin substrate is obtained even without primer treatment, thus resulting in a high level of usefulness in industry.

DETAILED DESCRIPTION

The following provides a detailed description of embodiments of the present disclosure.

A presently disclosed vinyl chloride resin composition can be used in formation of a presently disclosed vinyl chloride resin molded product.

A vinyl chloride resin molded product formed using the presently disclosed vinyl chloride resin composition can suitably be used, for example, as an automobile interior material such as a surface skin included in an automobile interior component such as an automobile instrument panel or door trim.

Moreover, the presently disclosed vinyl chloride resin molded product can be used in formation of a presently disclosed laminate. Furthermore, a laminate formed using the presently disclosed vinyl chloride resin molded product can suitably be used as an automobile interior material that is used in production of an automobile interior component such as an automobile instrument panel or door trim, for example. The present disclosure also relates to such an automobile instrument panel.

(Vinyl chloride resin composition)

A feature of the presently disclosed vinyl chloride resin composition is that it contains: (a) a vinyl chloride resin; (b) a plasticizer; and (c) a chlorinated polyolefin.

Note that the presently disclosed vinyl chloride resin composition may optionally further contain additives in addition to the (a) vinyl chloride resin, (b) plasticizer, and (c) chlorinated polyolefin mentioned above.

From a viewpoint of easily obtaining a vinyl chloride resin molded product that can favorably be used as an automobile interior material using the presently disclosed vinyl chloride resin composition, it is preferable that the presently disclosed vinyl chloride resin composition is used in powder molding, and more preferable that the presently disclosed vinyl chloride resin composition is used in powder slush molding.

The presently disclosed vinyl chloride resin composition can have a particulate form. The average particle diameter of the particulate composition is preferably 100 $\mu$m or more in terms of ensuring fluidity, and is preferably 500 $\mu$m or less in terms of surface uniformity of an obtained molded product.

Note that the "average particle diameter" referred to in the present disclosure can be measured in accordance with JIS Z8825 by laser diffraction as the volume-average particle diameter (D50 (median diameter)).

<(a) Vinyl chloride resin>

A particulate vinyl chloride resin is normally used as the (a) vinyl chloride resin. For example, one type or two or more types of vinyl chloride resin particles can be included as the (a) vinyl chloride resin, and one type or two or more types of vinyl chloride resin fine particles can optionally be further included as the (a) vinyl chloride resin. In particular, the (a) vinyl chloride resin preferably includes at least vinyl chloride resin particles, and more preferably includes vinyl chloride resin particles and vinyl chloride resin fine particles.

The (a) vinyl chloride resin can be produced by a conventionally known production method such as suspension polymerization, emulsion polymerization, solution polymerization, or bulk polymerization.

In the present specification, the term "resin particles" is used to refer to particles having a particle diameter of 30 $\mu$m or more, whereas the term "resin fine particles" is used to refer to particles having a particle diameter of less than 30 $\mu$m.

Examples of the (a) vinyl chloride resin include homopolymers composed of vinyl chloride monomer units and vinyl chloride copolymers preferably comprising 50 mass% or more of vinyl chloride monomer units, and more preferably comprising 70 mass% or more of vinyl chloride monomer units. Specific examples of monomers (comonomers) that are copolymerizable with vinyl chloride monomer and can be used to form a vinyl chloride copolymer include monomers described in WO2016/098344A1, for example. One of these components may be used individually, or two or more of these components may be used in combination in a freely selected ratio.

<<Vinyl chloride resin particles>>

In the vinyl chloride resin composition, the vinyl chloride resin particles normally function as a matrix resin (base material). The vinyl chloride resin particles are preferably produced by suspension polymerization.

[Average degree of polymerization]

The average degree of polymerization of a vinyl chloride resin forming the vinyl chloride resin particles is preferably 800 or more, and more preferably 1,000 or more, and is preferably 5,000 or less, more preferably 3,000 or less, and even more preferably 2,800 or less. When the average degree of polymerization of the vinyl chloride resin forming the vinyl chloride resin particles is not less than any of the lower limits set forth above, physical strength of a vinyl chloride resin molded product formed using the vinyl chloride resin composition can be sufficiently ensured while also improving tensile characteristics (particularly tensile elongation) of the vinyl chloride resin molded product, for example. A vinyl chloride resin molded product having good tensile elongation can suitably be used as an automobile interior material, such as a surface skin of an automobile instrument panel, that has excellent ductility and that ruptures as designed without scattering of fragments when an airbag expands and is deployed, for example. Moreover, when the average degree of polymerization of the vinyl chloride resin forming the vinyl chloride resin particles is not more than any of the upper limits set forth above, meltability of the vinyl chloride resin composition can be improved.

The "average degree of polymerization" referred to in the present disclosure can be measured in accordance with JIS K6720-2.

[Average particle diameter]

The average particle diameter of the vinyl chloride resin particles is normally 30 $\mu$m or more, preferably 50 $\mu$m or more, and more preferably 100 $\mu$m or more, and is preferably 500 $\mu$m or less, and more preferably 200 $\mu$m or less. When the average particle diameter of the vinyl chloride resin particles is not less than any of the lower limits set forth above, powder fluidity of the vinyl chloride resin composition can be improved. On the other hand, when the average particle diameter of the vinyl chloride resin particles is not more than any of the upper limits set forth above, meltability of the vinyl chloride resin composition can be improved, and surface smoothness of a formed vinyl chloride resin molded product can also be improved.

[Proportional content]

The proportional content of the vinyl chloride resin particles in the (a) vinyl chloride resin is preferably 70 mass% or more, and more preferably 80 mass% or more, can be set as 100 mass%, and is preferably 95 mass% or less, and more preferably 90 mass% or less. When the proportional content of the vinyl chloride resin particles in the (a) vinyl chloride resin is not less than any of the lower limits set forth above, physical strength of a formed vinyl chloride resin molded product can be sufficiently ensured while also improving tensile elongation of the vinyl chloride resin molded product. On the other hand, when the proportional content of the vinyl chloride resin particles in the (a) vinyl chloride resin is not more than any of the upper limits set forth above, powder fluidity of the vinyl chloride resin composition can be improved.

<<Vinyl chloride resin fine particles>>

In the vinyl chloride resin composition, the vinyl chloride resin fine particles typically function as a dusting agent (powder fluidity modifier). The vinyl chloride resin fine particles are preferably produced by emulsion polymerization.

[Average degree of polymerization]

The average degree of polymerization of a vinyl chloride resin forming the vinyl chloride resin fine particles is preferably 500 or more, and more preferably 700 or more, and is preferably 2,600 or less, and more preferably 2,400 or less. When the average degree of polymerization of the vinyl chloride resin forming the vinyl chloride resin fine particles that serve as a dusting agent is not less than any of the lower limits set forth above, powder fluidity of the vinyl chloride resin composition can be improved, and tensile elongation of a formed vinyl chloride resin molded product can also be improved. On the other hand, when the average degree of polymerization of the vinyl chloride resin forming the vinyl chloride resin fine particles is not more than any of the upper limits set forth above, meltability of the vinyl chloride resin composition can be increased, and surface smoothness of a formed vinyl chloride resin molded product can be improved.

Moreover, the average degree of polymerization of the vinyl chloride resin forming the vinyl chloride resin fine particles may be 2,000 or less, may be 1,500 or less, may be 1,000 or less, or may be 800 or less.

[Average particle diameter]

The average particle diameter of the vinyl chloride resin fine particles is normally less than 30 $\mu$m, preferably 10 $\mu$m or less, and more preferably 5 $\mu$m or less, and is preferably 0.1 $\mu$m or more, and more preferably 1 $\mu$m or more. When the average particle diameter of the vinyl chloride resin fine particles is not less than any of the lower limits set forth above, the vinyl chloride resin fine particles are not too small to function as a dusting agent, for example, and powder fluidity of the vinyl chloride resin composition can be improved. On the other hand, when the average particle diameter of the vinyl chloride resin fine particles is not more than any of the upper limits set forth above, meltability of the vinyl chloride resin composition can be increased, and surface smoothness of a formed vinyl chloride resin molded product can be improved.

[Proportional content]

The proportional content of the vinyl chloride resin fine particles in the (a) vinyl chloride resin may be 0 mass%, but is preferably 5 mass% or more, and more preferably 10 mass% or more, and is preferably 30 mass% or less, and more preferably 20 mass% or less. When the proportional content of the vinyl chloride resin fine particles in the (a) vinyl chloride resin is not less than any of the lower limits set forth above, powder fluidity of the vinyl chloride resin composition can be improved. On the other hand, when the proportional content of the vinyl chloride resin fine particles in the (a) vinyl chloride resin is not more than any of the upper limits set forth above, physical strength of a formed vinyl chloride resin molded product can be increased.

<(b) Plasticizer>

The (b) plasticizer is a component that can impart flexibility to a vinyl chloride resin molded product formed using the vinyl chloride resin composition and that can improve tensile characteristics (particularly tensile elongation) of the vinyl chloride resin molded product. Moreover, the inclusion of the (b) plasticizer in the vinyl chloride resin composition makes it easy to mold (particularly powder mold) the vinyl chloride resin composition.

The content of the (b) plasticizer in the vinyl chloride resin composition is preferably 30 parts by mass or more, more preferably 50 parts by mass or more, even more preferably 70 parts by mass or more, further preferably 80 parts by mass or more, even further preferably 90 parts by mass or more, and particularly preferably 100 parts by mass or more relative to 100 parts by mass of the (a) vinyl chloride resin, and is preferably 200 parts by mass or less, more preferably 180 parts by mass or less, even more preferably 160 parts by mass or less, further preferably 140 parts by mass or less, and even further preferably 120 parts by mass or less relative to 100 parts by mass of the (a) vinyl chloride resin.

When the content of the (b) plasticizer in the vinyl chloride resin composition is not less than any of the lower limits set forth above, tensile characteristics (particularly tensile elongation) of a formed vinyl chloride resin molded product can be further improved. On the other hand, when the content of the (b) plasticizer in the vinyl chloride resin composition is not more than any of the upper limits set forth above, sufficiently high adhesiveness of a formed vinyl chloride resin molded product to a foamed polyurethane molded product can be ensured.

Examples of plasticizers that can be used as the (b) plasticizer include the following primary plasticizers and secondary plasticizers.

Examples of so-called primary plasticizers include:

trimellitic acid esters such as tri-n-hexyl trimellitate, tri-n-heptyl trimellitate, tri-n-octyl trimellitate, tri(2-ethylhexyl) trimellitate, tri-n-nonyl trimellitate, tri-n-decyl trimellitate, triisodecyl trimellitate, tri-n-undecyl trimellitate, tri-n-dodecyl trimellitate, tri-n-alkyl trimellitates (esters including two or more types of alkyl groups of differing carbon number (with a proviso that the carbon number is 6 to 12) in a molecule), and trialkyl trimellitates (esters including two or more types of alkyl groups of differing carbon number (with a proviso that the carbon number is 8 to 10) in a molecule);
pyromellitic acid esters such as tetra-n-hexyl pyromellitate, tetra-n-heptyl pyromellitate, tetra-n-octyl pyromellitate, tetra(2-ethylhexyl) pyromellitate, tetra-n-nonyl pyromellitate, tetra-n-decyl pyromellitate, tetraisodecyl pyromellitate, tetra-n-undecyl pyromellitate, tetra-n-dodecyl pyromellitate, and tetra-n-alkyl pyromellitates (esters including two or more types of alkyl groups of differing carbon number (with a proviso that the carbon number is 6 to 12) in a molecule);
phthalic acid derivatives such as dimethyl phthalate, diethyl phthalate, dibutyl phthalate, di(2-ethylhexyl) phthalate, di-n-octyl phthalate, diisobutyl phthalate, diheptyl phthalate, diphenyl phthalate, diisodecyl phthalate, ditridecyl phthalate, diundecyl phthalate, dibenzyl phthalate, butyl benzyl phthalate, dinonyl phthalate, and dicyclohexyl phthalate;
isophthalic acid derivatives such as dimethyl isophthalate, di(2-ethylhexyl) isophthalate, and diisooctyl isophthalate;
tetrahydrophthalic acid derivatives such as di(2-ethylhexyl) tetrahydrophthalate, di-n-octyl tetrahydrophthalate, and diisodecyl tetrahydrophthalate;
adipic acid derivatives such as di-n-butyl adipate, di(2-ethylhexyl) adipate, diisodecyl adipate, and diisononyl adipate;
azelaic acid derivatives such as di(2-ethylhexyl) azelate, diisooctyl azelate, and di-n-hexyl azelate;
sebacic acid derivatives such as di-n-butyl sebacate, di(2-ethylhexyl) sebacate, diisodecyl sebacate, and di(2-butyloctyl) sebacate;
maleic acid derivatives such as di-n-butyl maleate, dimethyl maleate, diethyl maleate, and di(2-ethylhexyl) maleate;
fumaric acid derivatives such as di-n-butyl fumarate and di(2-ethylhexyl) fumarate;
citric acid derivatives such as triethyl citrate, tri-n-butyl citrate, acetyl triethyl citrate, and acetyl tri(2-ethylhexyl) citrate;
itaconic acid derivatives such as monomethyl itaconate, monobutyl itaconate, dimethyl itaconate, diethyl itaconate, dibutyl itaconate, and di(2-ethylhexyl) itaconate;
oleic acid derivatives such as butyl oleate, glyceryl monooleate, and diethylene glycol monooleate;
ricinoleic acid derivatives such as methyl acetyl ricinoleate, butyl acetyl ricinoleate, glyceryl monoricinoleate, and diethylene glycol monoricinoleate;
stearic acid derivatives such as n-butyl stearate and diethylene glycol distearate;
other fatty acid derivatives such as diethylene glycol monolaurate, diethylene glycol dipelargonate, and pentaerythritol fatty acid esters;
phosphoric acid derivatives such as triethyl phosphate, tributyl phosphate, tri(2-ethylhexyl) phosphate, tributoxyethyl phosphate, triphenyl phosphate, cresyl diphenyl phosphate, tricresyl phosphate, trixylenyl phosphate, and tris(chloroethyl) phosphate;
glycol derivatives such as diethylene glycol dibenzoate, dipropylene glycol dibenzoate, triethylene glycol dibenzoate, triethylene glycol di(2-ethylbutyrate), triethylene glycol di(2-ethylhexanoate), and dibutyl methylenebis(thioglycolate);
glycerin derivatives such as glycerol monoacetate, glycerol triacetate, and glycerol tributyrate;
epoxy derivatives such as diisodecyl epoxy hexahydrophthalate, epoxy triglyceride, epoxidized octyl oleate, and epoxidized decyl oleate; and
polyester plasticizers such as a polyester including a structural unit derived from adipic acid (adipic acid polyester), a polyester including a structural unit derived from sebacic acid (sebacic acid polyester), and a polyester including a structural unit derived from phthalic acid (phthalic acid polyester).

Examples of so-called secondary plasticizers include epoxidized vegetable oils such as epoxidized soybean oil and epoxidized linseed oil, chlorinated paraffins, fatty acid esters of glycols such as triethylene glycol dicaprylate, butyl epoxy stearate, phenyl oleate, and methyl dihydroabietate.

One of these plasticizers may be used individually, or two or more of these plasticizers may be used in a freely selected ratio.

In particular, it is preferable to use either or both of a trimellitic acid ester and a polyester as the (b) plasticizer, and more preferable to use at least a trimellitic acid ester (hereinafter, also referred to as the "(b1) trimellitic acid ester") as the (b) plasticizer. By using the (b1) trimellitic acid ester as the (b) plasticizer, it is possible to further improve tensile elongation of a formed vinyl chloride resin molded product.

A plasticizer other than a trimellitic acid ester (hereinafter, also referred to as the "(b2) other plasticizer") can be further used in addition to the (b1) trimellitic acid ester as the (b) plasticizer.

<<(bl) Trimellitic acid ester>>

The proportional content of the (b1) trimellitic acid ester in the (b) plasticizer is preferably 90 mass% or more, more preferably 92 mass% or more, and even more preferably 93 mass% or more, can be set as 100 mass% or less, and is preferably 99 mass% or less, and more preferably 98 mass% or less.

When the proportional content of the (b1) trimellitic acid ester in the (b) plasticizer is not less than any of the lower limits set forth above, tensile elongation of a formed vinyl chloride resin molded product can be even further improved. On the other hand, when the proportional content of the (b1) trimellitic acid ester in the (b) plasticizer is not more than any of the upper limits set forth above, sufficiently high adhesiveness of a formed vinyl chloride resin molded product to a foamed polyurethane molded product can be ensured.

The content of the (b1) trimellitic acid ester in the vinyl chloride resin composition is preferably 25 parts by mass or more, more preferably 45 parts by mass or more, even more preferably 65 parts by mass or more, further preferably 75 parts by mass or more, even further preferably 85 parts by mass or more, and particularly preferably 95 parts by mass or more relative to 100 parts by mass of the (a) vinyl chloride resin, and is preferably 195 parts by mass or less, more preferably 175 parts by mass or less, even more preferably 155 parts by mass or less, further preferably 135 parts by mass or less, and even further preferably 115 parts by mass or less relative to 100 parts by mass of the (a) vinyl chloride resin.

When the proportional content of the (b1) trimellitic acid ester in the vinyl chloride resin composition is not less than any of the lower limits set forth above, tensile elongation of a formed vinyl chloride resin molded product can be even further improved. On the other hand, when the (b1) trimellitic acid ester in the vinyl chloride resin composition is not more than any of the upper limits set forth above, sufficiently high adhesiveness of a formed vinyl chloride resin molded product to a foamed polyurethane molded product can be ensured.

<<(b2) Other plasticizer>>

From a viewpoint of further improving tensile characteristics (tensile elongation and tensile stress) of a formed vinyl chloride resin molded product, it is preferable that epoxidized vegetable oil is used as the (b2) other plasticizer, and more preferable that epoxidized soybean oil is used as the (b2) other plasticizer.

Although no specific limitations are placed on the proportional content of the (b2) other plasticizer in the (b) plasticizer, the proportional content can be set as 0 mass% or more, is preferably 1 mass% or more, and more preferably 3 mass% or more, can be set as 10 mass% or less, and is preferably 8 mass% or less, and more preferably 7 mass% or less, for example.

The content of the (b2) other plasticizer in the vinyl chloride resin composition is also not specifically limited can be set as not less than 0 parts by mass and not more than 15 parts by mass relative to 100 parts by mass of the (a) vinyl chloride resin.

In a case in which epoxidized vegetable oil such as epoxidized soybean oil is used as the (b2) other plasticizer, the content of the epoxidized vegetable oil as the (b2) other plasticizer is preferably 2 parts by mass or more, more preferably 3 parts by mass or more, and even more preferably 4 parts by mass or more relative to 100 parts by mass of the (a) vinyl chloride resin, and is preferably 10 parts by mass or less, and more preferably 7 parts by mass or less relative to 100 parts by mass of the (a) vinyl chloride resin from a viewpoint of even further improving tensile characteristics (tensile elongation and tensile stress) of a formed vinyl chloride resin molded product.

<(c) Chlorinated polyolefin>

The (c) chlorinated polyolefin is a component that can improve adhesiveness to a polyolefin substrate of a vinyl chloride resin molded product that is formed using the vinyl chloride resin composition.

The term "chlorinated polyolefin" refers to a product obtained through chlorination of a polyolefin. The term "olefin" encompasses olefin polymers and modified products thereof.

The term "olefin polymer" encompasses homopolymers of an $\alpha$-olefin, copolymers of two or more $\alpha$-olefins, and copolymers of an $\alpha$-olefin and another non-polar monomer. The copolymer may be a random copolymer or may be a block copolymer. The content ratio of each monomer unit in the copolymer can be calculated from the amount of each monomer that is used in production of the olefin polymer or from analysis results of the copolymer (for example, NMR analysis results).

The $\alpha$-olefin may be an $\alpha$-olefin having a carbon number of not less than 2 and not more than 12, examples of which include ethylene, propylene, 1-butene, 4-methyl-1-pentene, 3-methyl-1-butene, 1-hexene, and 1-octene. Ethylene and propylene are preferable as the $\alpha$-olefin.

The other non-polar monomer may be a styrenic monomer such as styrene, a conjugated diene such as butadiene, a cycloolefin such as norbornene, or the like. Any of these non-polar monomers may be included so long as the effects according to the present disclosure are not lost. For example, 30 mass% or less in the copolymer may be monomer units derived from another non-polar monomer.

The olefin polymer is preferably a homopolymer of propylene, a copolymer of propylene and another $\alpha$-olefin (for example, an ethylene-propylene copolymer or an ethylene-propylene-1-butene copolymer), or the like.

The modified product of an olefin polymer may be an acid-modified product of an olefin polymer. For example, the modified product may be a modified product of an unsaturated carboxylic acid or derivative thereof. The modified product may be a graft modified product, or may be a modified product resulting from introduction into a copolymer as a monomer unit.

The unsaturated carboxylic acid may be (meth)acrylic acid, maleic acid, fumaric acid, tetrahydrophthalic acid, itaconic acid, citraconic acid, crotonic acid, isocrotonic acid, norbornene dicarboxylic acid, bicyclo[2.2.1]hept-2-ene-5,6-dicarboxylic acid, or the like, for example. Of these unsaturated carboxylic acids, maleic acid is preferable. One unsaturated carboxylic acid can be used, or two or more unsaturated carboxylic acids can be used.

The derivative of an unsaturated carboxylic acid may be an acid anhydride, acid halide, amide, imide, ester, or salt of an unsaturated carboxylic acid, for example. For example, the derivative of an unsaturated carboxylic acid may be maleic anhydride, itaconic anhydride, citraconic anhydride, tetrahydrophthalic anhydride, bicyclo[2.2.1]hept-2-ene-5,6-dicarboxylic acid anhydride, malenyl chloride, acrylamide, methacrylamide, malenyl imide, dimethyl maleate, monomethyl maleate, diethyl maleate, monoethyl maleate, diethyl fumarate, dimethyl itaconate, diethyl citraconate, dimethyl tetrahydrophthalate, dimethyl bicyclo[2.2.1]hept-2-ene-5,6-dicarboxylate, alkyl (meth)acrylate, hydroxyethyl (meth)acrylate, hydroxypropyl (meth)acrylate, glycidyl (meth)acrylate, an ammonium salt of an unsaturated carboxylic acid, an amine salt of an unsaturated carboxylic acid, or the like. Of these derivatives, an acid anhydride of an unsaturated carboxylic acid is preferable, and maleic anhydride is more preferable. One derivative of an unsaturated carboxylic acid can be used, or two or more derivatives of unsaturated carboxylic acids can be used.

The modified product of an olefin polymer is preferably an acid-modified product or the like of an olefin polymer selected from a homopolymer of propylene, a copolymer of propylene and another $\alpha$-olefin, (for example, an ethylene-propylene copolymer or an ethylene-propylene-1-butene copolymer), etc., and is more preferably a maleic acid-modified product, a maleic anhydride-modified product, or the like.

In the modified product of an olefin polymer with an unsaturated carboxylic acid or derivative thereof, constitutional units derived from the unsaturated carboxylic acid or derivative thereof are preferably 0.1 mass% or more, and more preferably 0.5 mass% or more. This total proportion is preferably 10 mass% or less, more preferably 5 mass% or less, and even more preferably 4 mass% or less.

The (c) chlorinated polyolefin is a product obtained through chlorination of the olefin polymer and/or modified product thereof. The chlorine content ratio is preferably 10 mass% or more, more preferably 15 mass% or more, and even more preferably 20 mass% or more, and is preferably 45 mass% or less, and more preferably 40 mass% or less. The chlorine content ratio can be measured based on JIS K 7229:1995.

The weight-average molecular weight (Mw) of the chlorinated polyolefin is preferably 10,000 or more, and more preferably 20,000 or more in terms of adhesiveness to a polyolefin substrate. Moreover, the weight-average molecular weight (Mw) is preferably 260,000 or less, and more preferably 240,000 or less in terms of causing melting during molding.

Mw refers to a value that is measured by gel permeation chromatography with polystyrene as a reference substance and is a value measured by a method in accordance with JIS K 7252-1:2016.

The chlorinated polyolefin may, for example, be a commercially available product produced by Nippon Paper Industries Co., Ltd. (SUPERCHLON 814HS, SUPERCHLON 390S, etc.) or a commercially available product produced by Toyobo Co., Ltd. (product name: HARDLEN 13-LLP, HARDLEN 15-LLP).

The content of the (c) chlorinated polyolefin in the vinyl chloride resin composition is preferably 0.1 parts by mass or more, more preferably 0.5 parts by mass or more, and even more preferably 1.0 parts by mass or more relative to 100 parts by mass of the (a) vinyl chloride resin in terms of adhesiveness to a polyolefin substrate, and is preferably 50 parts by mass or less, more preferably 30 parts by mass or less, even more preferably 20 parts by mass or less, further preferably 10 parts by mass or less, and even further preferably 8 parts by mass or less relative to 100 parts by mass of the (a) vinyl chloride resin in terms of tensile elongation of the resin composition.

<Additives>

The presently disclosed vinyl chloride resin composition may further contain various additives besides the components set forth above. Examples of additives that may be used include, but are not specifically limited to, lubricants; stabilizers such as perchloric acid-treated hydrotalcite, zeolites, $\beta$-diketones, and fatty acid metal salts; mold release agents; dusting agents other than the previously described vinyl chloride resin fine particles; impact modifiers; perchloric acid compounds other than perchloric acid-treated hydrotalcite (sodium perchlorate, potassium perchlorate, etc.); antioxidants; fungicides; flame retardants; antistatic agents; fillers; light stabilizers; foaming agents; and pigments.

Additives that are described in WO2016/098344A1, for example, can be used as the aforementioned additives that can be contained in the presently disclosed vinyl chloride resin composition, and suitable amounts of these additives can also be the same as described in WO2016/098344A1.

Through the inclusion of a foaming agent in the presently disclosed vinyl chloride resin composition, it is possible to obtain a foamed vinyl chloride resin molded product.

<Production method of vinyl chloride resin composition>

The presently disclosed vinyl chloride resin composition can be produced by mixing the components described above.

The mixing method of the above-described (a) vinyl chloride resin, (b) plasticizer, (c) chlorinated polyolefin, and various additives that are further compounded as necessary may be a method in which components other than a dusting agent (inclusive of vinyl chloride resin fine particles) are mixed by dry blending, and then the dusting agent is subsequently added and mixed, for example, but is not specifically limited thereto. The dry blending is preferably carried out using a Henschel mixer. Although the temperature during dry blending is not specifically limited, the temperature is preferably 50°C or higher, and more preferably 70°C or higher, and is preferably 200°C or lower.

<Use of vinyl chloride resin composition>

The presently disclosed vinyl chloride resin composition can be used to produce a molded product. It is advantageous to perform molding under a temperature condition of 150°C or higher. When the temperature condition during molding of the vinyl chloride resin composition is 150°C or higher, meltability of the vinyl chloride resin composition can be sufficiently increased, and surface smoothness of a formed vinyl chloride resin molded product can be sufficiently improved.

The temperature condition during molding of the presently disclosed vinyl chloride resin composition is preferably 180°C or higher, more preferably 200°C or higher, and even more preferably 220°C or higher, and is preferably 300°C or lower, and more preferably 280°C or lower. When the temperature condition during molding of the vinyl chloride resin composition is not lower than any of the lower limits set forth above, surface smoothness of a formed vinyl chloride resin molded product can be further improved, and the formation of pinholes at a design surface can be inhibited. On the other hand, when the temperature condition during molding of the vinyl chloride resin composition is not higher than any of the upper limits set forth above, yellowing during molding of a formed vinyl chloride resin molded product and defective demolding of the vinyl chloride resin molded product from a mold can be inhibited.

The presently disclosed vinyl chloride resin composition can suitably be used in powder molding, and can more suitably be used in powder slush molding.

(Vinyl chloride resin molded product)

A feature of the presently disclosed vinyl chloride resin molded product is that it is obtained by molding the vinyl chloride resin composition set forth above by any method. Moreover, since the presently disclosed vinyl chloride resin molded product is formed using the vinyl chloride resin composition set forth above, the presently disclosed vinyl chloride resin molded product normally contains at least the (a) vinyl chloride resin, the (b) plasticizer, and the (c) chlorinated polyolefin. Furthermore, the presently disclosed vinyl chloride resin molded product has excellent adhesiveness to a polyolefin substrate.

Consequently, the presently disclosed vinyl chloride resin molded product can suitably be used as an automobile interior material such as a surface skin of an automobile instrument panel.

<Production method of vinyl chloride resin molded product>

The presently disclosed vinyl chloride resin molded product can be produced by molding the presently disclosed vinyl chloride resin composition set forth above. The temperature condition during molding of the vinyl chloride resin composition can be set within any of the ranges previously described in the "Use of vinyl chloride resin composition" section.

For example, in a situation in which the vinyl chloride resin molded product is formed by powder slush molding, the mold temperature in powder slush molding can be set as 150°C or higher, is preferably set as 200°C or higher, and more preferably set as 220°C or higher, and is preferably set as 300°C or lower, and more preferably set as 280°C or lower.

The following method, for example, can be used in production of the vinyl chloride resin molded product without any specific limitations. In this method, the presently disclosed vinyl chloride resin composition is sprinkled onto a mold having a temperature within any of the ranges set forth above. The vinyl chloride resin composition is initially left for not less than 5 seconds and not more than 30 seconds and, after shaking off any excess vinyl chloride resin composition, is then further left for not less than 30 seconds and not more than 3 minutes at an arbitrary temperature. The mold is subsequently cooled to a temperature of not lower than 10°C and not higher than 60°C, and the presently disclosed vinyl chloride resin molded product that is obtained is removed from the mold. A sheet-shaped molded product that imitates the shape of the mold is obtained.

(Laminate)

The presently disclosed vinyl chloride resin molded product has excellent adhesiveness to a polyolefin substrate even without a primer, and the present disclosure also relates to a laminate including the vinyl chloride resin molded product and a polyolefin substrate.

A polyolefin in the polyolefin substrate may be a propylene-based resin such as homo-polypropylene, a propylene-ethylene block copolymer, a propylene-butene random copolymer, or an ethylene-propylene-butene terpolymer, polyethylene, an olefinic thermoplastic elastomer, or a mixture of any thereof, for example, and it is preferable that the MFR of the polyolefin is within a range of 0.1 g/10 min to 300 g/10 min, and particularly within a range of 1 g/10 min to 200 g/10 min. These polyolefins may contain various additives such as various fillers (inorganic fillers, glass fiber, etc.), pigments, lubricants, antistatic agents, and stabilizers. The vinyl chloride resin molded product typically constitutes one surface of the laminate.

No specific limitations are placed on the method by which the vinyl chloride resin molded product and the polyolefin substrate are stacked. For example, a method in which the vinyl chloride resin molded product and the polyolefin substrate are separately prepared and in which the vinyl chloride resin molded product and the polyolefin substrate are subsequently affixed by thermal fusion bonding, thermal adhesion, or the like may be adopted. Note that although an adhesive may be used or the polyolefin substrate may be subjected to primer treatment in advance in production of the laminate, the laminate can easily be produced even without an adhesive or without performing primer treatment of the polyolefin substrate in advance because the presently disclosed vinyl chloride resin molded product has excellent adhesiveness to the polyolefin substrate.

The presently disclosed laminate may suitably be used as an automobile interior material forming an automobile interior component, and particularly forming an automobile instrument panel, and the present disclosure also relates to an automobile instrument panel including the presently disclosed laminate.

The presently disclosed vinyl chloride resin molded product can be a foamed vinyl chloride resin molded product. A presently disclosed vinyl chloride resin molded product that is a foamed vinyl chloride resin molded product and a presently disclosed vinyl chloride resin molded product that is not foamed may be stacked and then used as an automobile interior component.

The presently disclosed vinyl chloride resin molded product may be stacked with a foamed polyurethane molded product and then used as an automobile interior component. Examples of methods by which stacking with the foamed polyurethane molded product may be performed include, but are not specifically limited to a method in which the vinyl chloride resin molded product and the foamed polyurethane molded product are separately prepared and are subsequently affixed by thermal fusion bonding, thermal adhesion, an adhesive, or the like, and a method in which an isocyanate, a polyol, and so forth serving as raw materials of the foamed polyurethane molded product are caused to react and polymerize on the vinyl chloride resin molded product while carrying out polyurethane foaming to form the foamed polyurethane molded product on the vinyl chloride resin molded product.

EXAMPLES

The following provides a more specific description of the present disclosure based on examples. However, the present disclosure is not limited to the following examples. In the following description, "%" and "parts" used in expressing quantities are by mass, unless otherwise specified.

<Production of vinyl chloride resin composition>

Vinyl chloride resin compositions of examples and a comparative example were produced as follows.
With the exception of plasticizers (trimellitic acid ester and epoxidized soybean oil) and vinyl chloride resin fine particles used as a dusting agent, components indicated in Table 1 were loaded into and mixed in a Henschel mixer. At the point at which the temperature of the mixture rose to 80°C, all of the plasticizers were added, and drying up of the mixture was caused to occur (i.e., the mixture changed to a dry state through absorption of the plasticizers by vinyl chloride resin particles used as a vinyl chloride resin). Thereafter, once the dried-up mixture had cooled to a temperature of 70°C or lower, the vinyl chloride resin fine particles used as a dusting agent were added to the mixture to produce a particulate vinyl chloride resin composition.

<Production of vinyl chloride resin molded sheet>

A vinyl chloride resin molded sheet was produced from the vinyl chloride resin composition as described below.
The particulate vinyl chloride resin composition obtained as described above was sprinkled onto a textured mold that was heated to a temperature of 250°C and, after being left to melt for an arbitrary time, excess vinyl chloride resin composition was shaken off. Thereafter, the textured mold onto which the vinyl chloride resin composition had been sprinkled was placed at rest in an oven set to a temperature of 200°C, and, once 60 seconds had passed after being placed at rest, the textured mold was cooled with cooling water. Once the mold temperature had dropped to 40°C, a vinyl chloride resin molded sheet of 145 mm $\times$ 175 mm $\times$ 1 mm was removed from the mold as a vinyl chloride resin molded product.

<Adhesiveness to polyolefin substrate>

Evaluation of the adhesiveness of the vinyl chloride resin molded sheet as a vinyl chloride resin molded product to a polyolefin substrate was performed as follows.

The obtained vinyl chloride resin molded sheet was cut to 50 mm $\times$ 50 mm, was overlapped with a 50 mm $\times$ 50 mm $\times$ 3 mm polypropylene (PP) plate, was placed in a pressing machine heated to 200°C, and was held for 5 minutes while being pinched at 0.5 kN. Once 5 minutes had passed, the pressure was increased to 1.6 kN and maintained thereat for 10 seconds. Thereafter, the pressure was released, and the sample was removed and subsequently air cooled at room temperature (23°C).

After the sample had been air cooled to room temperature, the sample was cut to 20 mm $\times$ 50 mm to prepare a strip. An end part of the strip was peeled for 10 mm in a longitudinal direction, was held by a clamp, and then 90° peeling was performed at a speed of 50 mm/min. The maximum test force (N) during this peeling was recorded and was taken to be the peel strength. This measurement was performed at room temperature. The results are shown in Table 1.

A larger peel strength indicates that the vinyl chloride resin molded sheet (vinyl chloride resin molded product) has better adhesiveness to the polypropylene substrate.

[Table 1]

Table 1

| Category | Component | Comparative Example 1 | Example 1 | Example 2 | Example 3 | Example 4 | Example 5 | Example 6 | Example 7 |
|---|---|---|---|---|---|---|---|---|---|
| Vinyl chloride resin | Vinyl chloride resin particles[1] [parts by mass] | 100 | 100 | 100 | 100 | 100 | 100 | 100 | 100 |
| | Vinyl chloride resin fine particles (dusting agent)[2] [parts by mass] | 18 | 18 | 18 | 18 | 18 | 18 | 18 | 18 |
| Plasticizer | Trimellitic acid ester[3] [parts by mass] | 110 | 110 | 110 | 110 | 110 | 110 | 110 | 110 |
| | Other plasticizer (epoxidized soybean oil[4]) [parts by mass] | 5 | 5 | 5 | 5 | 5 | 5 | 5 | 5 |
| Stabilizer | Perchloric acid-substituted hydrotalcite[5] [parts by mass] | 1.8 | 1.8 | 1.8 | 1.8 | 1.8 | 1.8 | 1.8 | 1.8 |
| | Zeolite[6] [parts by mass] | 1 | 1 | 1 | 1 | 1 | 1 | 1 | 1 |
| | Stearoyl benzoyl methane ($\beta$-diketone)[7] [parts by mass] | 0.2 | 0.2 | 0.2 | 0.2 | 0.2 | 0.2 | 0.2 | 0.2 |
| | Zinc stearate[8] [parts by mass] | 0.1 | 0.1 | 0.1 | 0.1 | 0.1 | 0.1 | 0.1 | 0.1 |
| Mold release agent | 12-Hydroxystearic acid oligomer[9] [parts by mass] | 0.3 | 0.3 | 0.3 | 0.3 | 0.3 | 0.3 | 0.3 | 0.3 |
| Processing aid | Alkyl methacrylate/alkyl acrylate copolymer[10] [parts by mass] | 1 | 1 | 1 | 1 | 1 | 1 | 1 | 1 |
| Chlorinated polyolefin | Chlorinated polyolefin 1[11] [parts by mass] | | 5 | 10 | | | | | |
| | Chlorinated polyolefin 2[12] [parts by mass] | | | | 5 | 10 | | | |
| | Chlorinated polyolefin 3[13] [parts by mass] | | | | | | 10 | | |
| | Chlorinated polyolefin 4[14] [parts by mass] | | | | | | | 5 | 10 |
| Pigment | Black[15] [parts by mass] | 1.5 | 1.5 | 1.5 | 1.5 | 1.5 | 1.5 | 1.5 | 1.5 |

| | | Comparative Example 1 | Example 1 | Example 2 | Example 3 | Example 4 | Example 5 | Example 6 | Example 7 |
|---|---|---|---|---|---|---|---|---|---|
| Characteristics of chlorinated polyolefin | Weight-average molecular weight (Mw) | | 225000 | 225000 | 34000 | 34000 | 49000 | 50000 | 50000 |
| | Chlorination rate [%] | | 29.5 | 29.5 | 36 | 36 | 21 | 28 | 28 |
| Content relative to 100 parts by mass of vinyl chloride resin | Total plasticizer [parts by mass] | 97 | 97 | 97 | 97 | 97 | 97 | 97 | 97 |
| | Chlorinated polyolefin [parts by mass] | 0 | 4 | 8 | 4 | 8 | 8 | 4 | 8 |
| Evaluation result | Adhesiveness to PP substrate [N/20 mm] | 0.25 | 0.67 | 0.96 | 0.64 | 1.39 | 0.59 | 0.81 | 1.56 |

1) Product name: ZEST 1700ZI (produced by suspension polymerization; average degree of polymerization: 1,700; average particle diameter: 130 μm); produced by Shin Dai-ichi Vinyl Corporation 2) Product name: ZEST PQLTX (produced by emulsion polymerization; average degree of polymerization: 800; average particle diameter: 1.8 μm); produced by Shin Dai-ichi Vinyl Corporation 3) Product name: TOTM (tri(2-ethylhexyl) trimellitate); produced by Mitsubishi Gas Chemical Company, Ltd.

4) Product name: ADK CIZER O-130S; produced by Adeka Corporation 5) Product name: ALCAMIZER® 5 (ALCAMIZER is a registered trademark in Japan, other countries, or both); produced by Kyowa Chemical Industry Co., Ltd.

6) Product name: MIZUKALIZER DS; produced by Mizusawa Industrial Chemicals, Ltd.

7) Product name: Karenz DK-1; produced by Showa Denko K.K.

8) Product name: SAKAI SZ2000; produced by Sakai Chemical Industry Co., Ltd.

9) Product name: ADK STAB LS-12; produced by Adeka Corporation 10) Product name: METABLEN L-1000; produced by Mitsubishi Chemical Corporation 11) Product name: SUPERCHLON 803MWS (chlorinated polyolefin; chlorine content ratio: 29.5 mass%); produced by Nippon Paper Industries Co., Ltd.

12) Product name: SUPERCHLON 390S (chlorinated polyolefin; chlorine content ratio: 36 mass%); produced by Nippon Paper Industries Co., Ltd.

13) Product name: SUPERCHLON 3221S (acid-modified chlorinated polyolefin; chlorine content ratio: 21 mass%); produced by Nippon Paper Industries Co., Ltd.

14) Product name: SUPERCHLON 3228S (acid-modified chlorinated polyolefin; chlorine content ratio: 28 mass%); produced by Nippon Paper Industries Co., Ltd.

15) Product name: DA P 4720 Black; produced by Dainichiseika Color and Chemicals Mfg. Co., Ltd.

EP 4 692 222 A1

The weight-average molecular weight (Mw) of each chlorinated polyolefin in the table was measured as follows.

The weight-average molecular weight (Mw) is a value that was measured by gel permeation chromatography with polystyrene as a reference substance and is a value that was measured by a method in accordance with JIS K 7252-1:2016.

[GPC measurement conditions]

Measurement apparatus: GPC apparatus "1260 Infinity II HPLC" produced by Agilent Technologies, Inc.

Column:

PLgel 20 $\mu$m MiniMIX-A Guard 50 × 4.6 mm (produced by Agilent Technologies, Inc.) + PLgel 20 $\mu$m MiniMIX-A 250 × 4.6 mm (produced by Agilent Technologies, Inc.) + PLgel 20 $\mu$m MiniMIX-A 250 × 4.6 mm (produced by Agilent Technologies, Inc.) + PLgel 20 $\mu$m MiniMIX-A 250 × 4.6 mm (produced by Agilent Technologies, Inc.)

Detector: RI (differential refractometer)
Data processing: OpenLab CDS 2 produced by Agilent Technologies, Inc.
Colum temperature: 40°C
Eluent solvent: Tetrahydrofuran
Flow rate: 0.3 mL/min
Measurement sample: Measurement sample obtained by dissolving 5 mg of sample in 5 mL of tetrahydrofuran and filtering resultant solution using microfilter
Sample injection volume: 50 $\mu$L
Reference sample: Following monodisperse polystyrene of known molecular weight used in accordance with measurement manual of OpenLab CDS 2

(Monodisperse polystyrene)

A-2500 produced by Tosoh Corporation
A-5000 produced by Tosoh Corporation
F-1 produced by Tosoh Corporation
F-2 produced by Tosoh Corporation
F-4 produced by Tosoh Corporation
F-10 produced by Tosoh Corporation
F-20 produced by Tosoh Corporation
F-40 produced by Tosoh Corporation
F-80 produced by Tosoh Corporation
F-128 produced by Tosoh Corporation

It can be seen from Table 1 that it is possible to form a vinyl chloride resin molded product having excellent adhesiveness to a polyolefin substrate through the vinyl chloride resin compositions of Examples 1 to 7, which each contain a vinyl chloride resin, a plasticizer, and a chlorinated polyolefin.

In contrast, it can be seen that a vinyl chloride resin molded product formed through the vinyl chloride resin composition of Comparative Example 1, which does not contain a chlorinated polyolefin, has poor adhesiveness to a polyolefin substrate.

INDUSTRIAL APPLICABILITY

According to the present disclosure, it is possible to provide a vinyl chloride resin composition that is capable of forming a vinyl chloride resin molded product having excellent adhesiveness to a polyolefin substrate.

Moreover, according to the present disclosure, it is possible to provide a vinyl chloride resin molded product having excellent adhesiveness to a polyolefin substrate.

Furthermore, according to the present disclosure, it is possible to provide a laminate including this vinyl chloride resin molded product and an automobile instrument panel including this laminate.

According to the present disclosure, excellent adhesiveness of a vinyl chloride resin molded product to a polyolefin substrate is obtained even without primer treatment, thus resulting in a high level of usefulness in industry.

**Claims**

1. A vinyl chloride resin composition comprising a vinyl chloride resin, a plasticizer, and a chlorinated polyolefin.

2. The vinyl chloride resin composition according to claim 1, wherein the chlorinated polyolefin is not less than 0.1 parts by mass and not more than 50 parts by mass relative to 100 parts by mass of the vinyl chloride resin.

3. The vinyl chloride resin composition according to claim 1, wherein the chlorinated polyolefin has a chlorine content ratio of not less than 10 mass% and not more than 45 mass%.

4. The vinyl chloride resin composition according to claim 1, wherein the chlorinated polyolefin has a weight-average molecular weight of not less than 10,000 and not more than 260,000.

5. The vinyl chloride resin composition according to claim 1, wherein the plasticizer is not less than 30 parts by mass and not more than 140 parts by mass relative to 100 parts by mass of the vinyl chloride resin.

6. The vinyl chloride resin composition according to claim 1, used in powder molding.

7. The vinyl chloride resin composition according to claim 6, used in powder slush molding.

8. A vinyl chloride resin molded product obtained through molding of the vinyl chloride resin composition according to any one of claims 1 to 7.

9. The vinyl chloride resin molded product according to claim 8, for an automobile instrument panel.

10. A laminate comprising: the vinyl chloride resin molded product according to claim 8; and a polyolefin substrate.

11. An automobile instrument panel comprising the laminate according to claim 10.

## INTERNATIONAL SEARCH REPORT

| | International application No. |
|---|---|
| | **PCT/JP2024/010609** |

### A. CLASSIFICATION OF SUBJECT MATTER

*C08L 27/06*(2006.01)i; *B29C 41/18*(2006.01)i; *B32B 27/22*(2006.01)i; *B32B 27/30*(2006.01)i; *C08L 23/28*(2006.01)i
FI:    C08L27/06; B29C41/18; B32B27/22; B32B27/30 101; C08L23/28

According to International Patent Classification (IPC) or to both national classification and IPC

### B. FIELDS SEARCHED

Minimum documentation searched (classification system followed by classification symbols)

C08L27/06; B29C41/18; B32B27/22; B32B27/30; C08L23/28

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 49-88969 A (SUMITOMO BAKELITE CO., LTD.) 26 August 1974 (1974-08-26) claims, examples | 1-11 |
| X | JP 2015-30254 A (C I KASEI CO., LTD.) 16 February 2015 (2015-02-16) claims, examples | 1, 3, 8, 10 |
| A | | 2, 4-7, 9, 11 |
| X | WO 2011/152295 A1 (AUTONETWORKS TECHNOLOGIES LTD.) 08 December 2011 (2011-12-08) claims, examples | 1-5, 8 |
| A | | 6-7, 9-11 |
| A | JP 2000-7867 A (SHIN-ETSU POLYMER CO., LTD.) 11 January 2000 (2000-01-11) paragraph [0067] | 1-5, 8 |
| A | JP 1-120333 A (SEKISUI CHEMICAL CO., LTD.) 12 May 1989 (1989-05-12) entire text | 1-11 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **16 May 2024** | **28 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/010609**

| C. | DOCUMENTS CONSIDERED TO BE RELEVANT | |
|---|---|---|
| Category* | Citation of document, with indication, where appropriate, of the relevant passages | Relevant to claim No. |
| A | JP 4-164988 A (C I KASEI CO., LTD.) 10 June 1992 (1992-06-10)<br>entire text | 1-11 |

Form PCT/ISA/210 (second sheet) (July 2022)

**INTERNATIONAL SEARCH REPORT**
Information on patent family members

International application No.

**PCT/JP2024/010609**

| Patent document cited in search report | | | Publication date (day/month/year) | Patent family member(s) | | | Publication date (day/month/year) |
|---|---|---|---|---|---|---|---|
| JP | 49-88969 | A | 26 August 1974 | US | 4029850 | A | |
| | | | | claims, examples | | | |
| | | | | GB | 1456379 | A | |
| | | | | DE | 2364806 | A | |
| | | | | FR | 2212409 | A | |
| JP | 2015-30254 | A | 16 February 2015 | (Family: none) | | | |
| WO | 2011/152295 | A1 | 08 December 2011 | US | 2012/0172511 | A1 | |
| | | | | claims, examples | | | |
| | | | | CN | 102575077 | A | |
| JP | 2000-7867 | A | 11 January 2000 | (Family: none) | | | |
| JP | 1-120333 | A | 12 May 1989 | (Family: none) | | | |
| JP | 4-164988 | A | 10 June 1992 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61115839 A

- WO 2016098344 A1